# FASCICULE DE BREVET EUROPEEN

(11) **EP 0 872 939 B1**
(45) Date de publication et mention de la délivrance du brevet: **07.12.2005**
(21) Numéro de dépôt: 98410035.4
(22) Date de dépôt: 08.04.1998
(51) Int. Cl.: H02H 7/30

(54) **Déclencheur électronique sélectif, disjoncteur comportant un tel déclencheur et procédé de déclenchement sélectif**
Selektiver elektronischer Auslöser, Lastschalter mit einem solchen Auslöser und ein selektives Auslöseverfahren
Selective electronic trip device, circuit breaker with such a trip device and method for selective tripping

(30) Priorité: 15.04.1997 FR 9704915
(43) Date de publication de la demande: 21.10.1998
(73) Titulaire: SCHNEIDER ELECTRIC INDUSTRIES SAS, 92500 Rueil-Malmaison (FR)
(72) Inventeur: Boudaud, Dominique, c/o Schneider Electric, 38050 Grenoble, cedex 09 (FR)
(74) Mandataire: Jouvray, Marie-Andrée

(56) Documents cités:
- EP-A- 0 350 824
- FR-A- 2 160 459

## Description

L'invention concerne un déclencheur électronique sélectif comportant :
- au moins un capteur de courant fournissant des signaux représentatifs de courants primaires,
- une unité de traitement comportant des moyens de déclenchement instantanés sélectifs connectés au capteur de courant et fournissant un ordre de déclenchement en fonction de signaux fournis par ledit capteur.

Les déclencheurs électroniques connus comportent généralement des unités de traitement pour effectuer les protections de déclenchement thermique ou long retard, de déclenchement magnétique ou court retard, et de déclenchement instantané. Pour assurer la sélectivité entre deux disjoncteurs connectés en série ou en cascade, il est connu d'avoir un calibre élevé dans un disjoncteur amont et un calibre bas dans un disjoncteur aval. Dans ce cas la sélectivité en déclenchement instantané est ampérémétrique. Le seuil de déclenchement instantané du disjoncteur aval est inférieur à celui du disjoncteur amont.

Il est possible aussi d'utiliser une sélectivité chronométrique entre deux disjoncteurs. Dans ce cas, le déclencheur du disjoncteur amont a une temporisation du déclenchement instantané supérieure au temps de déclenchement du déclencheur du disjoncteur aval.

Ces deux types de sélectivité ne sont pas très efficaces, lorsque des courants de courts-circuits sont très élevés car des seuils de courant sont dépassés dans les deux disjoncteurs et une temporisation trop longue du déclencheur risque d'user prématurément des contacts du disjoncteur amont. Pour éviter ces inconvénients, des déclencheurs sélectifs comportent des dispositifs pour compter des battements ou des cycles d'ouverture fermeture des contacts sur un défaut de court-circuit. Un tel déclencheur est notamment décrit dans la demande de brevet Européen EP0128084. Un autre mode de traitement de la sélectivité est décrit dans une demande de brevet EP0350824, qui montre un déclencheur selon le preamble de la rev. 1.

Cependant, ces déclencheurs sélectifs de l'état de l'art doivent être utilisés dans des disjoncteurs limiteurs volumineux et encombrants pouvant supporter un nombre de cycle d'ouverture fermeture élevé et garantir ainsi une sélectivité efficace par rapport aux disjoncteurs disposés en aval.

L'utilisation de tels déclencheurs sélectifs dans des disjoncteurs normaux de faible dimension, risque de diminuer l'endurance desdits disjoncteurs. Cet inconvénient est essentiellement dû au temps de comptage des battements qui peut être de plusieurs cycles de courant alternatif.

L'invention a pour but un déclencheur sélectif ayant une sélectivité très élevée, un temps de réponse très rapide, et permettant d'accroître l'endurance des disjoncteurs.

Dans un déclencheur selon l'invention décrite dans le revendication 1, les moyens de déclenchement instantanés sélectifs comportent :
- des premiers moyens de détection d'une plage de fonctionnement connectés au capteur de courant,
- des seconds moyens de détection de répulsions produisant des interruptions de courant primaire entre deux alternances de courant alternatif primaire, et
- des moyens d'analyse, connectés aux premiers et seconds moyens de détection, pour inhiber la fourniture d'un ordre de déclenchement si des répulsions sont détectées pour des courants primaires inférieurs à un seuil prédéterminé.

Selon un mode de réalisation préféré de l'invention, les moyens d'analyse inhibent un ordre de déclenchement si des répulsions sont détectées pendant une période d'analyse prédéterminée.

De préférence, les premiers moyens de détection comportent des premiers moyens de comparaison pour comparer les signaux fournis par ledit capteur de courant à un premier seuil prédéterminé et les moyens de détermination du début de la période d'analyse.

Avantageusement, les seconds moyens de détection comportent des moyens pour détecter des signaux représentatifs de la dérivée du courant primaire.

Dans un mode de réalisation particulier de l'invention, les capteurs de courant sont des transformateurs de courant à circuit magnétique fournissant un courant secondaire comportant des pics représentatifs de répulsions, les signaux représentatifs de courant primaires correspondant audit courant secondaire.

De préférence, les seconds moyens de détection de répulsion comportent des moyens de détection de pics de signaux fournis par les capteurs, pour détecter lesdits pics pendant la période d'analyse prédéterminée.

Avantageusement, les moyens de détermination du début de la période d'analyse prédéterminée comportent des moyens de détection d'un passage à zéro ou proche de zéro de signaux fournis par les capteurs.

Selon un développement d'un mode particulier de réalisation, les seconds moyens de détection de répulsion comportent des moyens de mémorisation de la présence et de la valeur d'un pic de signal fourni par les capteurs.

Les moyens d'analyse comportent des seconds moyens de comparaison connectés aux moyens de détection de pics des signaux pour comparer la valeur des pics à un second seuil prédéterminé.

De préférence, les moyens de comparaison comparent la valeur des pics de signaux fournis par les capteurs au second seuil prédéterminé après la période d'analyse prédéterminée.

Par exemple, les moyens d'analyse inhibent un ordre de déclenchement instantané si les pics détectés sont inférieurs au second seuil prédéterminé.

Avantageusement, la période d'analyse prédéterminée est inférieure à dix millisecondes.

Un disjoncteur selon l'invention comporte des contacts principaux traversés par des courants primaires, un mécanisme d'ouverture desdits contacts commandé par un ordre de déclenchement, et un déclencheur selon l'un des modes de réalisation précédents fournissant un ordre de déclenchement audit mécanisme d'ouverture.

Un procédé de déclenchement sélectif selon l'invention comporte :
- une étape de mesure de signal représentatif d'un courant primaire circulant dans un conducteur électrique à protéger, caractérisé en ce qu'il comporte:

- une étape de comparaison du signal mesuré à un premier seuil prédéterminé,
- une étape de détermination de début d'observation de répulsion,
- une phase de détection de durée prédéterminée pour détecter l'apparition de signaux représentatifs de répulsions parmi les signaux mesurés, et
- une étape d'analyse pour inhiber le déclenchement instantané si des signaux représentatifs de répulsions apparaissent pour des courants primaires inférieurs à un second seuil prédéterminé.

Selon une première variante, le procédé de déclenchement sélectif comporte :
- une étape de mesure d'un signal représentatif d'un courant primaire fourni par un capteur de courant,
- une étape de comparaison dudit signal mesuré à un premier seuil prédéterminé,
- une étape de détection de passage à zéro ou proche de zéro du signal mesuré,
- une phase de détection de durée prédéterminée pour détecter des pics dans ledit signal mesuré, et
- une étape d'analyse pour inhiber le déclenchement instantané si des pics détectés sont inférieurs à un second seuil prédéterminé.

Selon une seconde variante du procédé, la phase de détection comporte une étape de comparaison des pics détectés pour donner un ordre de déclenchement avant la fin de la phase de détection si un pic détecté est supérieur à un troisième seuil prédéterminé.

Selon une troisième variante du procédé, la phase de détection comporte une étape de comparaison dudit signal mesuré à un troisième seuil prédéterminé pour donner un ordre de déclenchement avant la fin de la phase de détection si un pic n'est pas détecté et si ledit signal mesuré devient supérieur à un quatrième seuil prédéterminé.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
La figure 1 représente le schéma bloc d'un disjoncteur comportant un déclencheur de type connu;
La figure 2 représente un schéma bloc d'une installation électrique comportant des disjoncteurs pouvant avoir des déclencheurs sélectifs ;
La figure 3 montre des zones de fonctionnement de disjoncteurs de la figure 2 ;
La figure 4 montre un premier schéma bloc, d'un dispositif de déclenchement sélectif pour un déclencheur selon l'invention ;
La figure 5 montre des courbes illustrant les effets de répulsion de contact sur un courant primaire et sur un signal fourni par un capteur de courant ;
La figure 6 est un organigramme représentatif d'un premier procédé de déclenchement selon l'invention ;
Les figures 7 et 8 montrent des courbes de signaux redressés fournis par des capteurs disposés dans un disjoncteur amont pour des défauts de courts-circuits en aval dudit disjoncteur amont ou de deux disjoncteurs en série respectivement à un premier et à un second niveau de courant ;
La figure 9 montre un second schéma bloc d'un dispositif de déclenchement sélectif pour un déclencheur selon l'invention comportant des capteurs à circuit magnétique ;
Les figures 10, 11 et 12 montrent des seconds, troisième et quatrième organigrammes représentatifs de procédés de déclenchement selon l'invention.

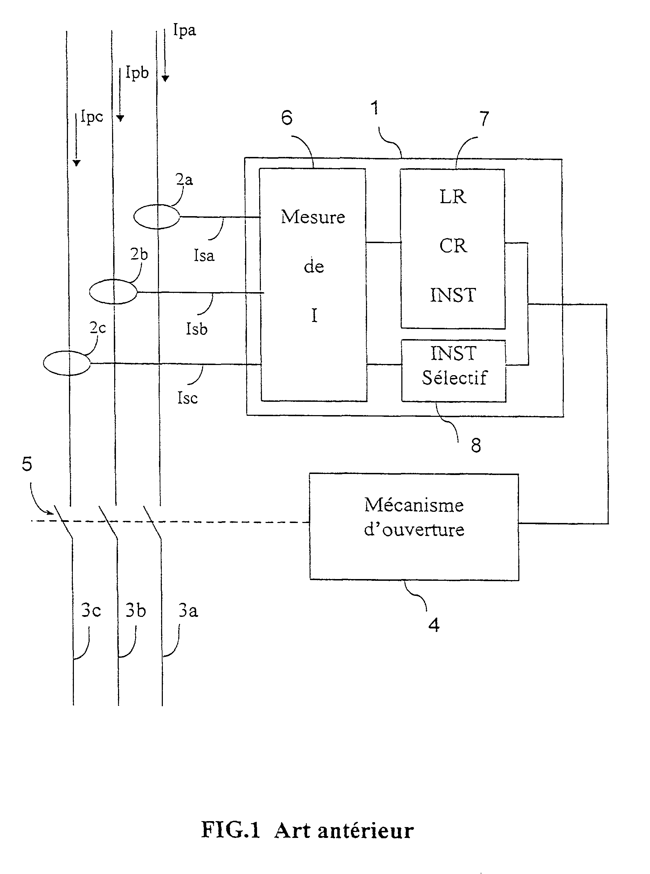

Dans un disjoncteur de type connu comme celui représenté sur la figure 1, un déclencheur électronique comporte une unité de traitement 1 connectée à des capteurs de courant 2a, 2b, 2c fournissant des signaux Isa, Isb et Isc représentatifs de courants primaires Ipa, Ipb et Ipc circulant dans les conducteurs principaux 3a, 3b et 3c. L'unité de traitement fournit un ordre de déclenchement à un mécanisme d'ouverture 4 pour ouvrir des contacts principaux 5, afin d'interrompre les courants primaires dans les conducteurs principaux.

Généralement, l'unité de traitement 1 comporte un circuit de mesure 6 de courant recevant les signaux Isa, Isb et Isc représentatifs des courants primaires, et un circuit électronique 7 pour effectuer les fonctions de déclenchement, connectés audit circuit de mesure et au mécanisme 4. De manière connue, ces fonctions de déclenchement sont des fonctions de protection thermique ou long retard, magnétique ou court retard, ou de déclenchement instantané. Le circuit 7 fournit un ordre de déclenchement lorsque des courants dépassent des seuils pendant des durées prédéterminées.

Dans des déclencheurs destinés à assurer une grande sélectivité, l'unité de traitement comporte un circuit 8 de déclenchement sélectif connecté au circuit de mesure 6 et fournissant ou inhibant un ordre de déclenchement en fonction des signaux représentatifs de courants primaires qu'il reçoit.

Des circuits de déclenchement connus comptent le nombre d'impulsions ou de battements dus à l'ouverture-fermeture des contacts 5. Ces circuits 8 sont spécialement adaptés aux disjoncteurs limiteurs de grandes dimensions.

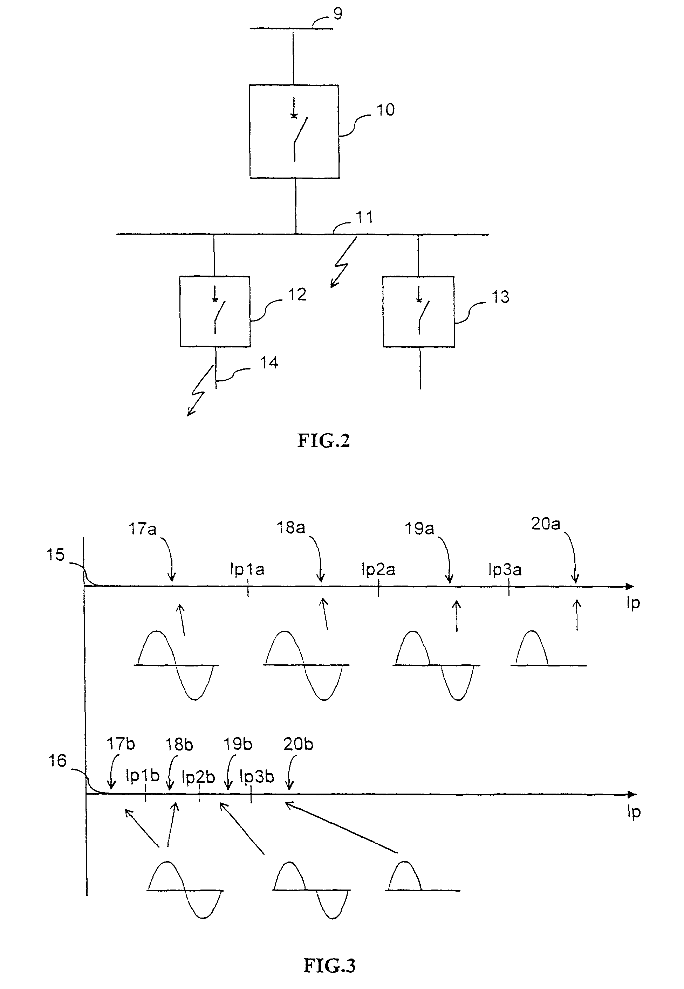

La figure 2 montre une installation comportant des disjoncteurs disposés en cascade et devant avoir un fonctionnement sélectif. Un premier disjoncteur 10 amont, comportant un circuit de déclenchement sélectif 8, est connecté à une ligne principale 9 et alimente une ligne secondaire 11 connectée à deux disjoncteurs avals 12 et 13.

Si un court-circuit électrique se produit sur une ligne 14 alimentée par un disjoncteur aval par exemple le disjoncteur 12, le disjoncteur 10 détecte le défaut mais ne doit pas déclencher immédiatement. Dans ce cas, le disjoncteur aval 12 qui détecte également le défaut déclenche et annule le courant du court-circuit. Le disjoncteur amont 10 ne détecte plus de défaut, ne déclenche pas et continue à alimenter d'autres disjoncteurs ou appareils, notamment le disjoncteur 13.

Un court-circuit se produisant sur la ligne 11, alimentée directement par le disjoncteur amont 10 est détecté uniquement par ledit disjoncteur 10. Dans ce cas, un dispositif de déclenchement instantané connu compte les battements ou opère une temporisation du déclenchement pour assurer la sélectivité.

Dans un déclencheur selon un mode de réalisation de l'invention, le dispositif de déclenchement instantané peut différencier rapidement les défauts de court-circuit se produisant sur des lignes 11, alimentées directement par le disjoncteur 10 ou sur des lignes 14 alimentées par au moins deux disjoncteurs en série 10 et 12.

Sur la figure 3, deux courbes montrent le comportement de deux disjoncteurs de calibres différents en fonction de plages de courants primaires. Une première courbe 15 concerne un disjoncteur amont 10 de calibre élevé et une seconde courbe 16, concerne un disjoncteur aval de calibre moins élevé.

Pour le disjoncteur amont 10, le courant primaire Ip, dont le niveau est dans une première plage de fonctionnement 17a inférieure à un premier niveau Ip1a, ne produit pas de répulsion des contacts 5 dudit disjoncteur. Dans une seconde plage 18a entre le premier niveau et un second niveau de courant Ip2a, les contacts 5 sont répulsés, mais le courant primaire n'est pas perturbé de manière significative. Entre le second niveau de courant Ip2a et un troisième niveau Ip3a correspondant à une troisième plage 19a, des répulsions de contact perturbent le courant primaire en l'interrompant, notamment avant la fin d'un demi-cycle. Au-delà du troisième niveau de courant très élevé Ip3a, dans une quatrième plage de fonctionnement 20a, il est nécessaire de déclencher immédiatement, car un court-circuit se produit très près de la sortie du disjoncteur amont.

Pour le disjoncteur aval, il existe les mêmes plages de fonctionnement respectivement 17b, 18b, 19b et 20b mais pour des niveaux de courants plus faibles et ayant les mêmes effets. Ces niveaux sont respectivement le premier niveau Ip1b, le second niveau Ip2b, et le troisième niveau Ip3b.

Pour assurer la sélectivité, un circuit de détection instantanée 8, selon un mode de réalisation de l'invention, comporte des moyens pour reconnaître des répulsions de contact produites sur le disjoncteur amont 10 ou celles produites sur les contacts du disjoncteur aval 12 en série avec le disjoncteur 10. Les moyens pour reconnaître les répulsions analysent un signal Is représentatif du courant primaire Ip et détectent, dans ledit signal Is, des signaux ou des formes de signal représentatives de répulsions de contact. Les signaux ou les formes de signal détectés sont aussi analysés pour déterminer de quelles répulsions il s'agit et dans quelles plages de fonctionnement.

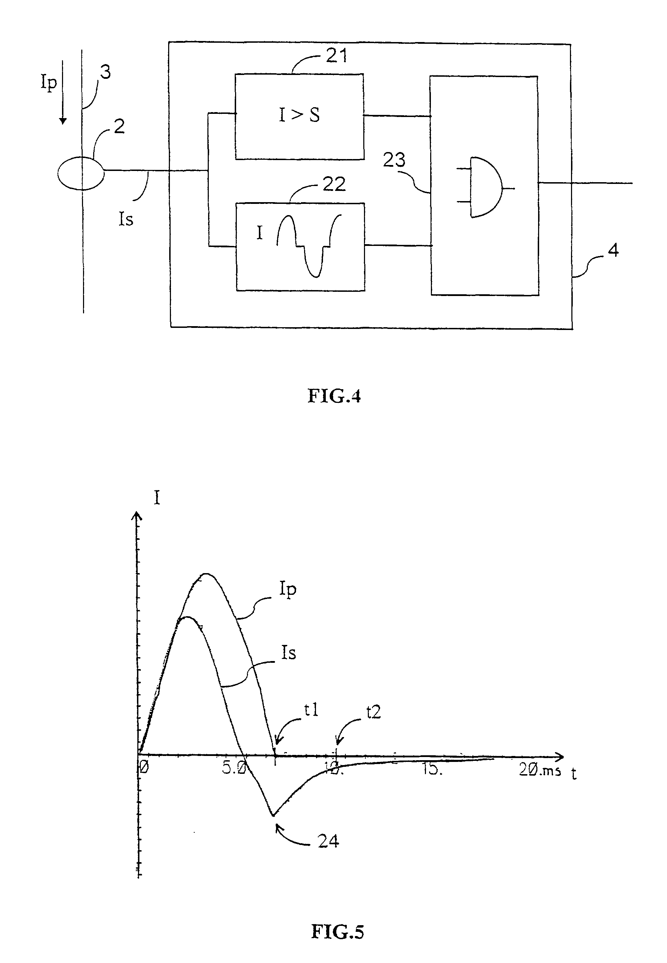

Dans le mode de réalisation de la figure 4, un dispositif de déclenchement sélectif 8, selon l'invention comporte un circuit de détection 21 de plage de fonctionnement et un circuit de détection 22 de répulsions interrompant le courant primaire avant la fin des alternances ou demi-périodes dudit courant primaire. Les deux circuits de détection sont connectés à un capteur 2 et reçoivent un signal Is représentatif d'un courant primaire Ip. Un circuit d'analyse 23 connecté aux deux circuits de détection, inhibe le déclenchement instantané du disjoncteur amont. Pour détecter les plages de fonctionnement, le circuit de détection 21 compare le signal Is à un seuil Sp représentatif du second niveau de courant Ip2a.

Les répulsions se manifestent dans les troisièmes plages de fonctionnement par des plats de courant entre deux lobes de courant primaires. Ces plats de courant peuvent être détectés directement par l'analyse du signal Is ou à l'aide des circuits dérivateurs.

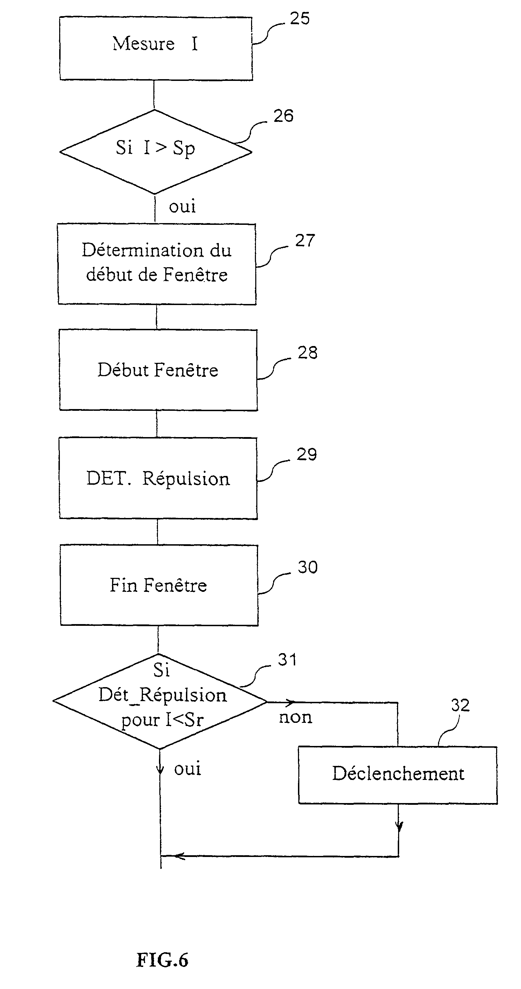

L'utilisation de capteurs de courant à circuit magnétique peut faciliter la détection de répulsion, notamment si le circuit magnétique, commence à saturer dans les plages de fonctionnement produisant des répulsions. La figure 5 montre la forme d'un signal Is représentatif d'un courant secondaire d'un capteur de courant traversé par un courant primaire Ip. Dans ce cas, le capteur de courant est de préférence un transformateur de courant.

La répulsion des contacts 5 limite le courant Ip, puis l'interrompt à un instant t1 avant la fin de l'alternance ou de la demi-période à un instant t2. Le courant primaire étant élevé, le circuit magnétique du transformateur sature et son fonctionnement commence à devenir dérivateur. Par conséquent, le courant secondaire Is est en avance de phase par rapport à Ip. Ensuite, à l'instant t1, le courant Ip est interrompu et le courant secondaire a une inversion de sens qui provoque un pic. Ce pic, représentatif d'une répulsion, peut être utilisé par les circuits de détection et d'analyse. Ainsi, la combinaison de l'avance de phase du capteur et les effets des répulsions, permet de générer un pic, dans le signal Is, représentatif desdites répulsions.

Ce pic se produit dans un intervalle de temps prédéterminé pendant lequel une répulsion peut se produire.

Dans un procédé pour mettre en oeuvre l'invention, représenté sur la figure 6, une première étape 25, consiste à mesurer un signal représentatif du courant Ip. Puis dans une seconde étape 26, le signal est comparé à un premier seuil Sp, pour déterminer la plage de fonctionnement. Dans une étape 27, un instant du début de l'observation des répulsions est déterminé. Lorsque les capteurs sont dérivateurs ou générent une avance de phase, l'instant du début d'observation est, de préférence, déclenché par le passage à zéro du signal mesuré. Si le signal est, par exemple, redressé, le début peut être déclenché lorsque ledit signal devient proche de zéro.

Avec ce type de capteurs, le passage à zéro précède le moment des répulsions. Ensuite, entre des étapes de début et de fin de fenêtre d'observation, respectivement 28 et 30, les répulsions peuvent être détectées lors d'une étape 29.

La durée de la fenêtre d'observation est de préférence inférieure à dix millisecondes, par exemple entre 5 et 8 ms.

Après la période d'observation, une étape d'analyse 31, permet d'inhiber le déclenchement si des répulsions ont été détectées pour un courant inférieur à un second seuil Sr. Dans le cas contraire, le déclenchement est autorisé lors d'une étape 32.

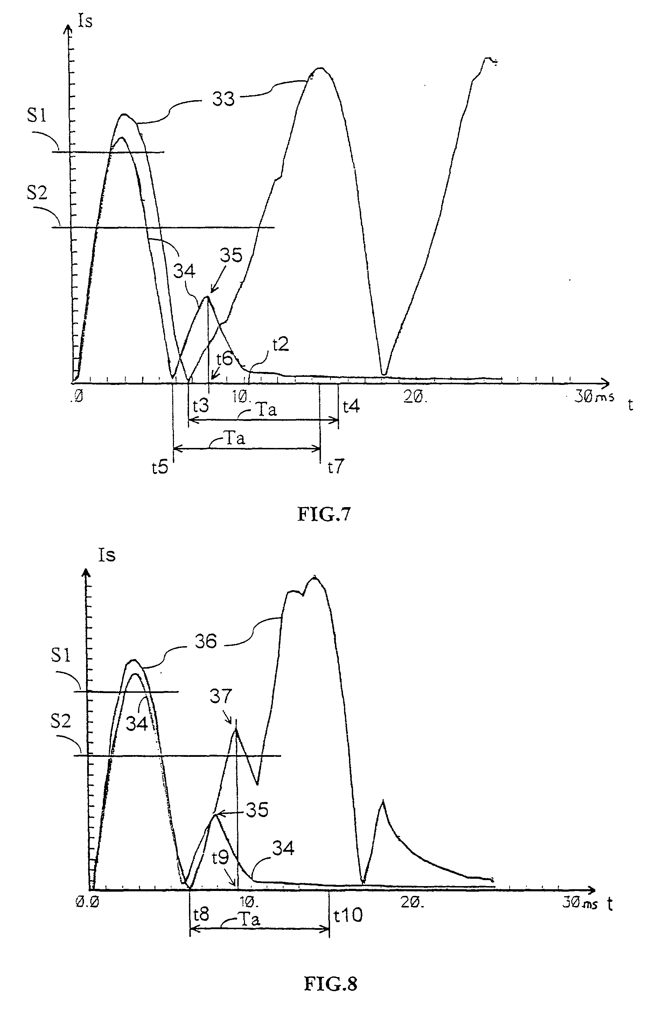

Les figures 7 et 8 montrent des signaux reçus par des dispositifs de déclenchement instantanés dans des déclencheurs selon un mode de réalisation. Les signaux sont représentés en valeurs absolues ou redressés, notamment pour un circuit de mesure 6.

Une première courbe 33 de la figure 7, montre un signal Is, représentatif d'un courant Ip, lors d'un court-circuit se produisant en sortie du disjoncteur amont 10, par exemple, sur la ligne 11. Si le signal Is (courbe 33) dépasse le seuil S1, le dispositif de déclenchement 8 attend le passage à zéro ou proche de zéro dudit signal Is, qui se produit à un instant t3.

Ensuite, pendant une période Ta, d'analyse, il observe si des signaux représentatifs de répulsion sont présents dans le signal Is. Dans ce cas, il détecte la présence de pics pendant la période Ta, et à un instant t4, il constate la présence ou non de pics. Cette courbe 33 ne comportant pas de pics, il n'y a pas eu de répulsions dues à un disjoncteur aval et par conséquent, le déclenchement instantané ne sera pas inhibé car seul le disjoncteur amont est concerné par ce défaut de court-circuit.

Une seconde courbe 34, de la figure 7 montre un signal Is, représentatif d'un courant Ip lors d'un court-circuit, se produisant en sortie d'un disjoncteur aval, par exemple, sur la ligne 14. Dans ce cas aussi, le signal Is dépasse le seuil S1, par conséquent, les troisième ou quatrième plages de fonctionnement sont détectées. Ensuite, le signal passe à zéro ou devient proche de zéro à l'instant t5 et une période Ta correspondant à une fenêtre d'observation est engagée. Pendant ce temps, un circuit de détection 22, détecte la présence de pics. Sur cette courbe, un pic 35 apparaît à l'instant t6. Puis à l'instant t7, à la fin de la période d'observation, le pic est analysé. Si le pic est inférieur à un second seuil S2, cela signifie que la répulsion s'est produite sur un disjoncteur aval. Par conséquent, ce disjoncteur aval va disjoncter et ouvrir ces contacts pour éliminer le court-circuit. Dans ce cas, le dispositif de déclenchement sélectif inhibe le déclenchement du disjoncteur amont pour laisser le temps au disjoncteur aval d'ouvrir et éliminer le court-circuit. La sélectivité est ainsi assurée.

Sur cette courbe 34, le pic est plus faible, car la répulsion du disjoncteur aval se fait pour des courants Ip inférieurs à ceux du disjoncteur amont. De même, si deux disjoncteurs sont en série, et que tous les deux répulsent, le courant limité sera plus faible et le pic sera inférieur au seuil S2.

La figure 8 montre une troisième courbe 36 du signal Is représentatif d'un courant Ip de court-circuit très élevé se produisant en sortie du disjoncteur amont 10, par exemple, sur la ligne 11. Comme dans les autres courbes, le signal Is dépasse le seuil S1, puis à l'instant t8, il passe par zéro. Ensuite, pendant une fenêtre d'analyse de période Ta, une détection de pics est effectuée. Dans ce cas, un pic est détecté à l'instant t9. La valeur de ce pic peut être mémorisée puis traitée à la fin de la période Ta de la fenêtre d'analyse. Puisque ce pic est supérieur au second seuil S2, le déclenchement ne doit pas être inhibé car le disjoncteur amont fonctionne seul dans sa troisième plage de fonctionnement. Le pic d'amplitude élevée est représentatif de répulsions des contacts du disjoncteur amont.

Il est également possible dans un autre mode de réalisation, de détecter l'amplitude des pics, pendant la période Ta d'analyse. Dans ce cas, si le pic est supérieur au seuil S2, le déclenchement peut être provoqué avant la fin de la période d'analyse pour accélérer l'ouverture du disjoncteur amont.

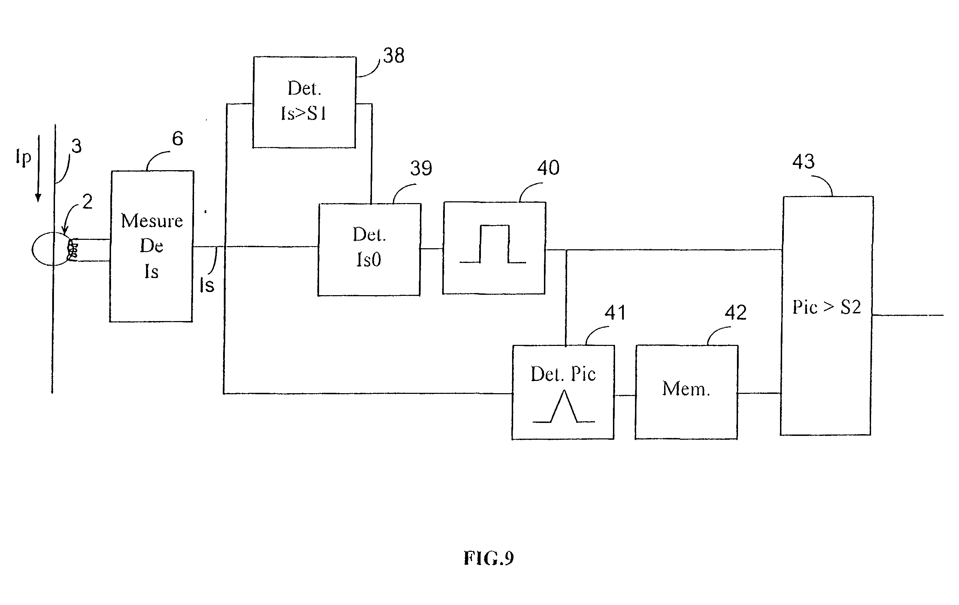

La figure 9 représente un dispositif de déclenchement instantané sélectif pour un déclencheur selon l'invention. Le dispositif est adapté notamment aux déclencheurs comportant des capteurs de courant 2 à circuit magnétique tels que, des transformateurs de courant. Le circuit de mesure 6 reçoit un courant fourni par le capteur et fournit un signal Is représentatif du courant du capteur ou du courant primaire Ip.

Le signal est comparé à un premier seuil S1 dans un premier circuit de détection 38, ensuite le circuit 38 commande un circuit de détection 39 de passage à zéro. Lorsque le signal Is fourni au circuit 39 passe par zéro, le circuit commande un circuit de temporisation 40 qui contrôle un circuit de détection de pic 41 pendant la période Ta. La période Ta est de préférence inférieure à 10 ms. Le circuit de détection reçoit aussi le signal Is et détecte la présence de pics. Si un pic est détecté, il est mémorisé dans un circuit de mémorisation 42 connecté au circuit 41. A la fin de la période d'analyse, un circuit d'analyse connecté aux circuits 40 et 42, compare la valeur du pic au seuil S2. Si le pic est inférieur au seuil S2, le déclenchement instantané est inhibé. Le circuit 43, peut aussi détecter si le pic est supérieur au seuil S2 et donner un ordre de déclenchement avant la fin de la période Ta.

Le circuit de détection du pic détecte une croissance et décroissance consécutives du signal.

Les circuits représentés sur les figures 4 et 9 peuvent être réalisés sous forme analogique, numérique ou mixte. Ils peuvent aussi être intégrés sous forme de fonctions ou de procédés dans des circuits à microprocesseurs. Ces fonctions peuvent être séparées ou associées à d'autres fonctions de déclenchement. Dans ces modes de réalisation les signaux Is sont de préférence, échantillonnés.

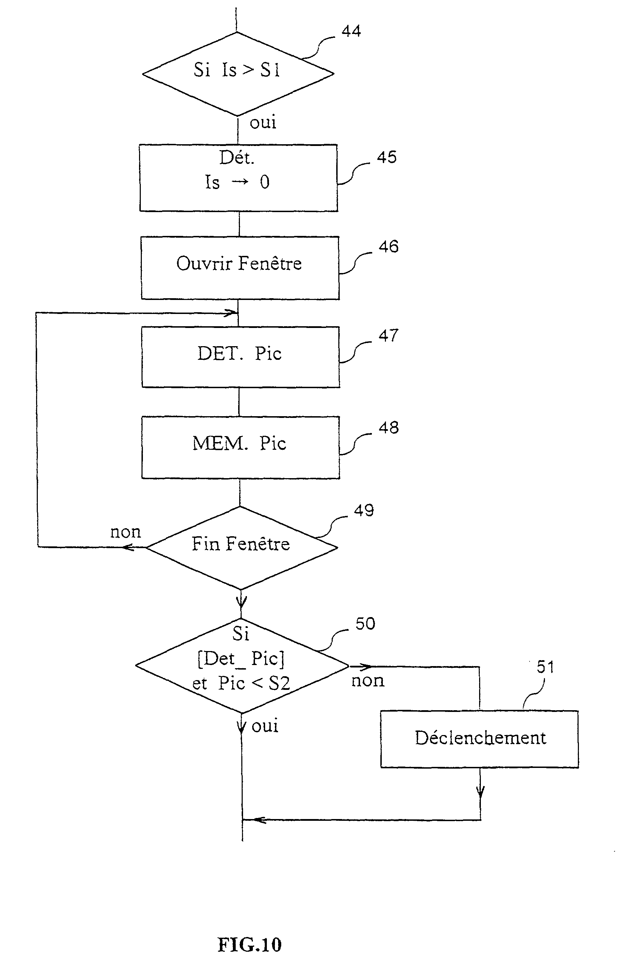

L'organigramme de la figure 10 montre un procédé de déclenchement instantané sélectif. Le procédé comprend une première étape 44 de comparaison du signal Is à un premier seuil S1. Puis si le signal est supérieur à S1, il y a une étape 45 de détection de passage à zéro dudit signal Is. Le passage à zéro concerne aussi des valeurs proches de zéro, notamment lorsque le signal est redressé.

Après la détection de passage à zéro, une phase de détection comprend une étape 46 qui ouvre une fenêtre d'analyse. Pendant la durée de la fenêtre d'analyse de période Ta, une étape 47, détecte la présence de pic et une étape 48 mémorise la valeur des pics détectés. Une étape 49 détecte la fin de la fenêtre d'analyse et de la phase de détection. Ensuite une étape 50 inhibe le déclenchement si le pic détecté est inférieur au second seuil S2, sinon un déclenchement est autorisé à une étape 51.

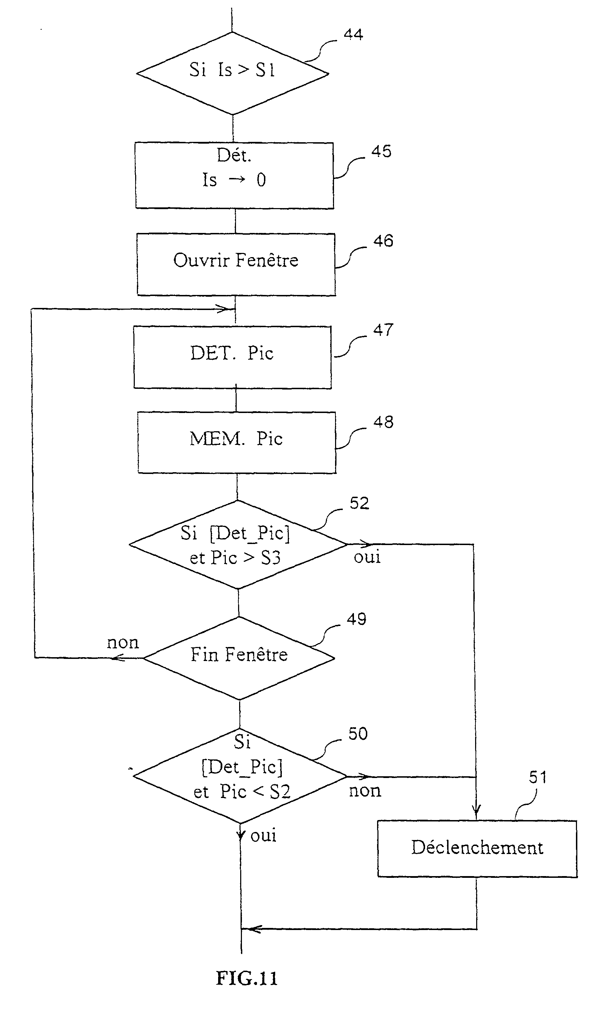

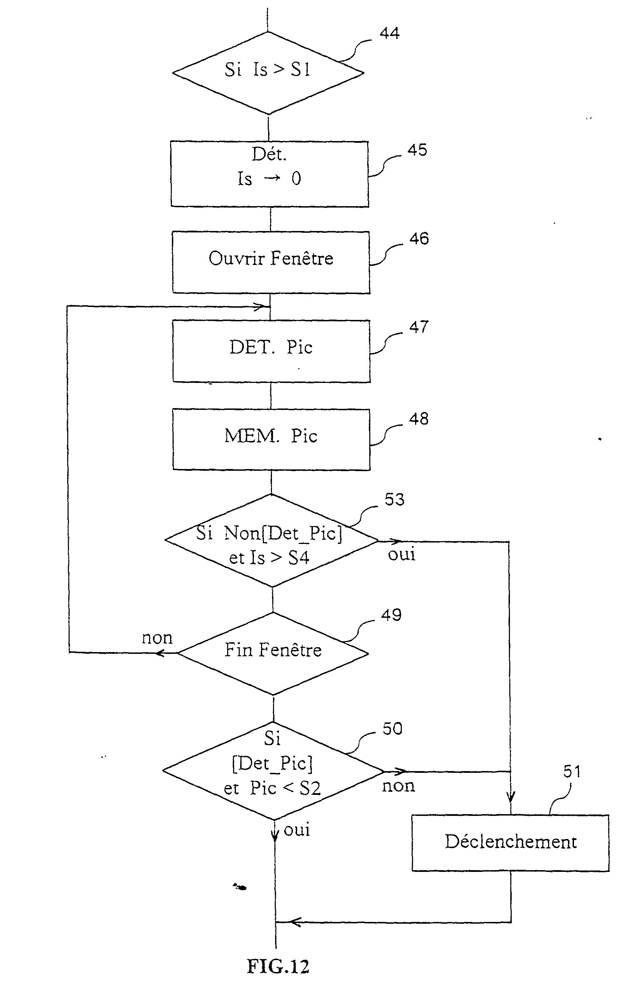

Les figures 11 et 12 représentent des variantes de l'organigramme de la figure 10.

Dans l'organigramme de la figure 11, un procédé de déclenchement instantané comporte une étape 52 supplémentaire de comparaison, après les étapes 48 ou 49 de détection ou de mémorisation. Cette étape 52 est utilisée pour comparer un pic détecté à un seuil S3 et déclencher à l'étape 51, si la valeur du pic est supérieure audit seuil S3.

Dans l'organigramme de la figure 12, un procédé de déclenchement instantané comporte une étape 53 supplémentaire de comparaison, après les étapes 48 ou 49 de détection ou de mémorisation. Cette étape 53 est utilisée pour comparer le signal mesuré à un seuil S4 et déclencher à l'étape 51 si un pic n'est pas détecté et si la valeur dudit signal mesuré devient supérieur au seuil prédéterminé S4.

De préférence, les seuils S2, S3, et S4 ont la même valeur, mais des valeurs différentes peuvent également convenir.

Les déclencheurs selon l'invention comportant des dispositifs de déclenchement instantanés sélectifs, sont de préférence intégrés dans les disjoncteurs destinés à être installés en amont d'autres disjoncteurs. Les disjoncteurs comportant de tels déclencheurs ne sont pas nécessairement des disjoncteurs limiteurs très volumineux.

Bien que les capteurs de courant préférés sont des transformateurs à circuit magnétique, des déclencheurs selon l'invention peuvent comporter d'autres types de capteurs tels que des cellules à effet Hall, à magnétorésistance, ou des tores de Rogowski.

Dans les dispositifs de déclenchement instantanés sélectifs, il est possible de détecter d'autres signaux que des pics pour identifier la présence de répulsions ou de plats de courant dans le courant primaire Ip.

## Revendications

1. Déclencheur électronique sélectif comportant :
- au moins un capteur de courant (2, 2a, 2b, 2c) fournissant des signaux (Is, Isa, Isb, Isc) représentatifs de courants primaires (Ip, Ipa, Ipb, Ipc),
- une unité de traitement (1) comportant des moyens de déclenchement instantanés sélectifs (8) connectés au capteur de courant et fournissant un ordre de déclenchement en fonction de signaux fournis par ledit capteur,
déclencheur **caractérisé en ce que** les moyens de déclenchement instantanés sélectifs comportent :
- des premiers moyens de détection (21, 26, 38, 44) d'une plage de fonctionnement connectés au capteur de courant,
- des seconds moyens de détection (22, 29, 41, 47) de répulsions produisant des interruptions de courant primaire entre deux alternances de courant alternatif primaire (Ip), et
- des moyens d'analyse (23, 31, 43, 50), connectés aux premiers et seconds moyens de détection, pour inhiber la fourniture d'un ordre de déclenchement si des répulsions sont détectées pour des courants primaires inférieurs à un seuil prédéterminé (Sp, S1).

2. Déclencheur selon la revendication 1, **caractérisé en ce que** les moyens d'analyse inhibent un ordre de déclenchement si des répulsions sont détectées pendant une période (Ta, 40, 28, 30, 46, 49) d'analyse prédéterminée.

3. Déclencheur selon la revendication 2 **caractérisé en ce que** les premiers moyens de détection (21, 26, 38, 44) comportent des premiers moyens de comparaison (26, 38, 44) pour comparer les signaux fournis (Is) par ledit capteur de courant à un premier seuil (S1) prédéterminé et les moyens de détermination (27, 39, 45) du début de la période d'analyse (Ta).

4. Déclencheur selon l'une quelconque des revendications 1 à 3 **caractérisé en ce que** les seconds moyens de détection (22, 41, 47) comportent des moyens (41, 47) pour détecter des signaux représentatifs de la dérivée du courant primaire (Ip).

5. Déclencheur selon l'une quelconque des revendications 1 à 4 **caractérisé en ce que** les capteurs de courant (2) sont des transformateurs de courant à circuit magnétique fournissant un courant secondaire (Is) comportant des pics (24, 35, 37) représentatifs de répulsions, les signaux représentatifs de courant primaires correspondant audit courant secondaire.

6. Déclencheur selon l'une quelconque des revendications 2 à 5 **caractérisé en ce que** les seconds moyens de détection de répulsion comportent des moyens de détection (41, 47) de pics de signaux fournis par les capteurs, pour détecter lesdits pics pendant la période (Ta) d'analyse prédéterminée.

7. Déclencheur selon une quelconque des revendications 3 à 6 **caractérisé en ce que** les moyens de détermination du début de la période d'analyse prédéterminée comportent des moyens de détection (39, 45, 46) d'un passage à zéro ou proche de zéro de signaux (Is) fournis par les capteurs.

8. Déclencheur selon l'une quelconque des revendications 5 à 7 **caractérisé en ce que** les seconds moyens de détection de répulsion (22) comportent des moyens de mémorisation (42, 48) de la présence et de la valeur d'un pic de signal fourni (Is) par les capteurs.

9. Déclencheur selon l'une quelconque des revendications 6 à 8 **caractérisé en ce que** les moyens d'analyse comportent des seconds moyens de comparaison (43, 50) connectés aux moyens de détection (41, 47) de pics des signaux (24, 35, 37) pour comparer la valeur des pics à un second seuil (S2, Sr) prédéterminé.

10. Déclencheur selon la revendication 9 **caractérisé en ce que** les moyens de comparaison comparent la valeur des pics (24, 35, 37) de signaux fournis par les capteurs au second seuil prédéterminé (S2) après la période d'analyse prédéterminée (Ta).

11. Déclencheur selon l'une des revendications 9 ou 10 **caractérisé en ce que** les moyens d'analyse inhibent un ordre de déclenchement instantané si les pics (24, 35, 37) détectés sont inférieurs au second seuil prédéterminé (S2).

12. Déclencheur selon l'une quelconque des revendications 2 à 11 **caractérisé en ce que** la période d'analyse prédéterminée est inférieure à dix millisecondes.

13. Disjoncteur comportant des contacts principaux traversés par des courants primaires (Ip, Ipa, Ipb, Ipc) et un mécanisme (4) d'ouverture desdits contacts commandé par un ordre de déclenchement, **caractérisé en ce qu'**il comporte un déclencheur (1) selon l'une quelconque des revendications 1 à 12 fournissant un ordre de déclenchement audit mécanisme d'ouverture.

14. Procédé de déclenchement sélectif comportant :
- une étape (25) de mesure de signal (Is) représentatif d'un courant primaire (Ip) circulant dans un conducteur électrique à protéger,
**caractérisé en ce qu'**il comporte :
- une étape de comparaison (26) du signal mesuré à un premier seuil (Sp) prédéterminé,
- une étape de détermination (27) de début d'observation de répulsion,
- une phase (28, 29, 30) de détection de durée prédéterminée pour détecter l'apparition de signaux représentatifs de répulsions parmi les signaux mesurés, et
- une étape d'analyse (31) pour inhiber le déclenchement instantané si des signaux représentatifs de répulsions apparaissent pour des courants primaires inférieurs à un second seuil prédéterminé (Sr).

15. Procédé de déclenchement sélectif selon la revendication 14 comportant une étape de mesure d'un signal (Is) représentatif d'un courant primaire fourni par un capteur de courant, et une étape (44) de comparaison dudit signal mesuré à un premier seuil (S1) prédéterminé, **caractérisé en ce qu'**il comporte :
- une étape (45) de détection de passage à zéro ou proche de zéro du signal mesuré,
- une phase de détection (46-49) de durée prédéterminée pour détecter des pics dans ledit signal mesuré, et
- une étape d'analyse (50) pour inhiber le déclenchement instantané si des pics détectés sont inférieurs à un second seuil (S2) prédéterminé.

16. Procédé selon la revendication 15 **caractérisé en ce que** la phase de détection comporte une étape de comparaison (52) des pics détectés pour donner un ordre de déclenchement avant la fin de la phase de détection si un pic détecté est supérieur à un troisième seuil prédéterminé (S3).

17. Procédé selon la revendication 15 **caractérisé en ce que** la phase de détection comporte une étape (53) de comparaison dudit signal mesuré à un troisième seuil (S3) prédéterminé pour donner un ordre de déclenchement avant la fin de la phase de détection si un pic n'est pas détecté et si ledit signal mesuré devient supérieur à un quatrième seuil prédéterminé (S4).

## Patentansprüche

1. Elektronischer Selektivauslöser mit
- mindestens einem Strom-Messwertgeber (2, 2a, 2b, 2c), der Primärströme (Ip, Ipa, Ipb, Ipc) abbildende Signale (Is, Isa, Isb, Isc) liefert,
- einer Verarbeitungseinheit (1) mit selektiven, unverzögerten Auslösemitteln (8), die mit dem Strom-Messwertgeber verbunden sind und einen Auslösebefehl in Abhängigkeit von durch den genannten Messwertgeber gelieferten Signalen liefern,
welcher Auslöser **dadurch gekennzeichnet ist, dass** die selektiven unverzögerten Auslösemittel
- an den Strom-Messwertgeber angeschlossene, erste Detektiermittel (21, 26, 38, 44) zur Erkennung eines Betriebsbereichs,
- zweite Detektiermittel (22, 29, 41, 47) zur Erkennung von Rückstößen, die Primärstromunterbrechungen zwischen zwei Halbwellen eines Primärwechselstroms (Ip) verursachen, und
- mit den ersten und den zweiten Detektiermitteln verbundene Analysemittel (23, 31, 43, 50) umfassen, die dazu dienen, das Absetzen eines Auslösebefehls zu verhindern, wenn die Rückstöße bei Primärströmen erkannt werden, die unter einem festgelegten Schwellwert (Sp, S1) liegen.

2. Auslöser nach Anspruch 1, **dadurch gekennzeichnet dass** die Analysemittel das Absetzen eines Auslösebefehls verhindern, wenn die Rückstöße während eines festgelegten Analyseintervalls (Ta, 40, 28, 30, 46, 49) erkannt werden.

3. Auslöser nach Anspruch 2, **dadurch gekennzeichnet, dass** die ersten Detektiermittel (21, 26, 38, 44) erste Vergleichsmittel (26, 38, 44) zum Vergleich der vom genannten Strom-Messwertgeber gelieferten Signale (Is) mit einem festgelegten ersten Schwellwert (S1) sowie die Mittel (27, 39, 45) zur Bestimmung des Beginns des Analyseintervalls (Ta) umfassen.

4. Auslöser nach irgendeinem der Ansprüche 1 bis 3, **dadurch gekennzeichnet, dass** die zweiten Detektiermittel (22, 41, 47) Mittel (41, 47) zur Detektion von Signalen umfassen, die die Änderung des Primärstroms (Ip) über die Zeit abbilden.

5. Auslöser nach irgendeinem der Ansprüche 1 bis 4, **dadurch gekennzeichnet, dass** die Strom-Messwertgeber (2) als Magnetkreis-Stromwandler ausgebildet sind, die einen Sekundärstrom (Is) mit Rückstöße abbildenden Signalspitzen (24, 35, 37) liefern, wobei die Primärströme abbildenden Signale dem genannten Sekundärstrom entsprechen.

6. Auslöser nach irgendeinem der Ansprüche 2 bis 5, **dadurch gekennzeichnet, dass** die zweiten Rückstoß-Detektiermittel Detektiermittel (41, 47) zur Erkennung von durch die Messwertgeber gelieferten Signalspitzen umfassen, um die genannten Signalspitzen während des festgelegten Analyseintervalls (Ta) zu detektieren.

7. Auslöser nach irgendeinem der Ansprüche 3 bis 6, **dadurch gekennzeichnet, dass** die Mittel zur Bestimmung des Beginns des Analyseintervalls Detektiermittel (39, 45, 46) zur Erkennung eines Nulldurchgangs oder einer Nullnähe von durch die Messwertgeber gelieferten Signalen (Is) umfassen.

8. Auslöser nach irgendeinem der Ansprüche 5 bis 7, **dadurch gekennzeichnet, dass** die zweiten Rückstoß-Detektiermittel (22) Speichermittel (42, 48) zur Speicherung des Auftretens und des Wertes einer von den Messwertgebern gelieferten Signalspitze (Is) umfassen.

9. Auslöser nach irgendeinem der Ansprüche 6 bis 8, **dadurch gekennzeichnet, dass** die Analysemittel mit den Detektiermitteln (41, 47) zur Erkennung von Signalspitzen verbundene zweite Vergleichsmittel (43, 50) zum Vergleich des Wertes der Signalspitzen mit einem festgelegten zweiten Schwellwert (S2, Sr) umfassen.

10. Auslöser nach Anspruch 9, **dadurch gekennzeichnet, dass** die Vergleichsmittel den Wert der von den Messwertgebern gelieferten Signalspitzen (24, 35, 37) nach Ablauf des festgelegten Analyseintervalls (Ta) mit dem zweiten festgelegten Schwellwert (S2) vergleichen.

11. Auslöser nach einem der Ansprüche 9 oder 10, **dadurch gekennzeichnet, dass** die Analysemittel das Absetzen eines Befehls für eine unverzögerte Auslösung verhindern, wenn die erkannten Signalspitzen (24, 35, 37) unter dem festgelegten zweiten Schwellwert (S2) liegen.

12. Auslöser nach einem der Ansprüche 2 bis 11, **dadurch gekennzeichnet, dass** das festgelegte Analyseintervall kleiner als zehn Millisekunden ist.

13. Leistungsschalter mit von Primärströmen (Ip, Ipa, Ipb, Ipc) durchflossenen Hauptkontakten und einem durch einen Auslösebefehl angesteuerten Ausschaltmechanismus (4) zur Abschaltung der genannten Kontakte, **dadurch gekennzeichnet, dass** er einen Auslöser (1) nach irgendeinem der Ansprüche 1 bis 12 umfasst, der den genannten Ausschaltmechanismus mit einem Auslösebefehl beaufschlagt.

14. Selektives Auslöseverfahren mit
- einem Schritt (25) zur Messung eines Signals (Is), das einen über einen zu schützenden elektrischen Leiter fließenden Primärstrom (Ip) abbildet,
**dadurch gekennzeichnet, dass** es
- einen Schritt (26) zum Vergleich des Messsignals mit einem festgelegten ersten Schwellwert (Sp),
- einen Schritt (27) zur Bestimmung des Beginns der Rückstoßerfassung,
- eine Detektierphase (28, 29, 30) festgelegter Dauer zur Erfassung des Auftretens von Rückstöße abbildenden Signalen unter den Messsignalen sowie
- einen Analyseschritt (31) umfasst, der dazu dient, die unverzögerte Auslösung zu verhindern, wenn die Rückstöße abbildenden Signale bei Primärströmen auftreten, die unter einem festgelegten zweiten Schwellwert (Sr) liegen.

15. Selektives Auslöseverfahren nach Anspruch 14 mit einem Schritt zur Messung eines Signals (Is), das einen von einem Strom-Messwertgeber gelieferten Primärstrom abbildet, sowie einem Schritt (44) zum Vergleich des genannten Messsignals mit einem ersten festgelegten Schwellwert (S 1), **dadurch gekennzeichnet, dass** es
- einen Schritt (45) zur Erkennung eines Nulldurchgangs oder einer Nullnähe des Messsignals,
- eine Detektierphase (46-49) festgelegter Dauer zur Erkennung von Spitzen im genannten Messsignal sowie
- eine Analysestufe umfasst, die dazu dient, die unverzögerte Auslösung zu verhindern, wenn die erfassten Signalspitzen unter einem festgelegten zweiten Schwellwert (S2) liegen.

16. Verfahren nach Anspruch 15, **dadurch gekennzeichnet, dass** die Detektierphase einen Schritt (52) zum Vergleich der erfassten Signalspitzen umfasst, um vor Ablauf der Detektierphase einen Auslösebefehl abzusetzen, wenn eine erfasste Signalspitze einen festgelegten dritten Schwellwert (S3) überschreitet.

17. Verfahren nach Anspruch 15, **dadurch gekennzeichnet, dass** die Detektierphase einen Schritt (53) zum Vergleich des genannten Messsignals mit einem festgelegten dritten Schwellwert (S3) umfasst, um vor Ablauf der Detektierphase einen Auslösebefehl abzusetzen, wenn keine Signalspitze erfasst wird und wenn das genannte Messsignal einen festgelegten vierten Schwellwert (S4) überschreitet.

## Claims

1. Selective electronic trip unit comprising:
- at least one current sensor (2, 2a, 2b, 2c) supplying signals (Is, Isa, Isb, Isc) representative of primary currents (Ip, Ipa, Ipb, Ipc),
- a processing unit (1) comprising selective instantaneous tripping means (8) connected to the current sensor and supplying a tripping order according to signals supplied by said sensor,
trip unit **characterized in that** the selective instantaneous tripping means comprise:
- first means (21, 26, 38, 44) for detecting an operating range, connected to the current sensor,
- second means (22, 29, 41, 47) for detecting repulses producing primary current interruptions between two half-waves of primary alternating current (Ip), and
- means (23, 31, 43, 50) for analysis, connected to the first and second means for detecting, to disable supply of a tripping order if repulses are detected for primary currents lower than a preset threshold (Sp, S1).

2. Trip unit according to claim 1 **characterized in that** the means for analysis disable a tripping order if repulses are detected during a preset analysis period (Ta, 40, 28, 30, 46, 49).

3. Trip unit according to claim 2 **characterized in that** the first means for detecting (21, 26, 38, 44) comprise first means for comparison (26, 38, 44) to compare the signals (Is) supplied by said current sensor with a first preset threshold (S1) and the means (27, 39, 45) for determining the start of the analysis period (Ta).

4. Trip unit according to any one of the claims 1 to 3 **characterized in that** the second means for detecting (22, 41, 47) comprise means (41, 47) for detecting signals representative of the derivative of the primary current (Ip).

5. Trip unit according to any one of the claims 1 to 4 **characterized in that** the current sensors (2) are magnetic circuit current transformers supplying a secondary current (Is) comprising peaks (24, 35, 37) representative of repulses, the signals representative of primary currents corresponding to said secondary current.

6. Trip unit according to any one of the claims 2 to 5 **characterized in that** the second means for detecting repulses comprise means (41, 47) for detecting signal peaks supplied by the sensors to detect said peaks during the preset analysis period (Ta).

7. Trip unit according to any one of the claims 3 to 6 **characterized in that** the means for determining the start of the preset analysis period comprise means (39, 45, 46) for detecting when signals (Is) supplied by the sensors cross zero or pass close to zero.

8. Trip unit according to any one of the claims 5 to 7 **characterized in that** the second means for detecting repulses (22) comprise means (42, 48) for storing the presence and value of a signal peak (Is) supplied by the sensors.

9. Trip unit according to any one of the claims 6 to 8 **characterized in that** the means for analysis comprise second means for comparison (43, 50) connected to the means (41, 47) for detecting signal peaks (24, 35, 37) to compare the value of the peaks with a second preset threshold (S2, Sr).

10. Trip unit according to claim 9 **characterized in that** the means for comparison compare the value of the signal peaks (24, 35, 37) supplied by the sensors with the second preset threshold (S2) after the preset analysis period (Ta).

11. Trip unit according to one of the claims 9 or 10 **characterized in that** the means for analysis disable an instantaneous tripping order if the peaks (24, 35, 37) detected are lower than the second preset threshold (S2).

12. Trip unit according to any one of the claims 2 to 11 **characterized in that** the preset analysis period is less than ten milliseconds.

13. Circuit breaker comprising main contacts wherethrough primary currents (Ip, Ipa, Ipb, Ipc) flow and a mechanism (4) for opening said contacts commanded by a tripping order, **characterized in that** it comprises a trip unit (1) according to any one of the claims 1 to 12 supplying a tripping order to said opening mechanism.

14. Selective tripping process comprising:
- a step (25) of measuring a signal (Is) representative of a primary current (Ip) flowing in an electrical conductor to be protected,
**characterized in that** it comprises:
- a step (26) for comparing the measured signal with a first preset threshold (Sp),
- a step (27) for determining the start of repulse observation,
- a detection phase (28, 29, 30) of preset duration to detect the occurrence of signals representative of repulses among the measured signals, and
- an analysis step (31) to disable instantaneous tripping if signals representative of repulses occur for primary currents lower than a second preset threshold (Sr).

15. Selective tripping process according to claim 14 comprising a step of measuring a signal (Is) representative of a primary current supplied by a current sensor, and a step (44) of comparing said measured signal with a first preset threshold (S1),
**characterized in that** it comprises:
- a step (45) for detecting when the measured signal cross zero or pass close to zero,
- a detection phase (46-49) of preset duration to detect peaks in said measured signal, and
- an analysis step (50) to disable instantaneous tripping if the detected peaks are lower than a second preset threshold (S2).

16. Process according to claim 15 **characterized in that** the detection phase comprises a step (52) of comparing the detected peaks to give a tripping order before the end of the detection phase if a detected peak is greater than a third preset threshold (S3).

17. Process according to claim 15 **characterized in that** the detection phase comprises a step (53) of comparing said measured signal with a third preset threshold (S3) to give a tripping order before the end of the detection phase if a peak is not detected and if said measured signal becomes greater than a fourth preset threshold (S4).
